# EUROPEAN PATENT SPECIFICATION

(11) **EP 0 823 920 B1**
(45) Date of publication and mention of the grant of the patent: **21.06.2000**
(21) Application number: 96915443.4
(22) Date of filing: 01.05.1996
(51) Int. Cl.: C08F 10/00, C08F 2/44

(54) **POLYOLEFIN COMPOSITES, PROCESS FOR MAKING THE SAME, AND SHAPED ARTICLES MADE THEREFROM**
Polyolefinverbundwerkstoffe, Verfahren zur deren Herstellung und daraus hergestellte Formkörper
Composites polyoléfiniques, leur procédé de production, et articles façonnés faits à partir de ces composites

(30) Priority: 05.05.1995 US 435695
(43) Date of publication of application: 18.02.1998
(73) Proprietor: THE DOW CHEMICAL COMPANY, Midland, Michigan 48674 (US)
(72) Inventor: MARTI, Miguel, Garcia, B-8370 Blankenberge (BE); HINDRYCKX, François, J., B-4122 Plainevaux (BE); DUBOIS, Philippe, G., B-4260 Ciplet (BE); JEROME, Robert, J., E., G., B-4130 Tilff-Esneux (BE); TEYSSIE, Philippe, B-4121 Neuville en Condroc (BE)
(74) Representative: Böhm, Brigitte, Dipl.-Chem. Dr.
(86) International application number: US9606112
(87) International publication number: WO9634900

(56) References cited:
- EP-A- 0 063 459
- TRENDS IN POLYMER SCIENCE, vol. 1, no. 9, September 1993, pages 274-280, XP000417191 DYACHKOVSKII: "New synthetic polyolefin composites"
- EUROPEAN POLYMER JOURNAL, vol. 24, no. 7, 1988, DEVON GB, pages 657-660, XP002010694 DAMYANOV D: "Filling of polyethylene by inorganic filler compounds during polymerization on the catalyst system TiCl4-(c2H5)2AlCl-(C6H5)2Mg"

## Description

This invention relates to a polyolefin composite, a process for the production of polyolefin composites comprising olefin homopolymer or interpolymer and filler, and a shaped article made from such a polyolefin composite.

Olefin polymers are widely used because of their low cost and good physical/mechanical properties. Much research has been directed toward ways of improving some of the properties, such as deflection temperature, stiffness and toughness to make such polymers suitable for certain end uses.

It is known to make compositions of olefin polymer with filler material, usually by compounding the olefin polymer with the filler. However, compounding suffers from several disadvantages. It requires considerable amounts of compounding energy to uniformly disperse the filler in the polymer. During compounding the filler may be mechanically deteriorated and the polymer may be degraded by the heat which is usually applied. Further, the production of composites containing filler uniformly dispersed therein by melt compounding techniques requires relatively low molecular weight polymers or low filling levels in order to keep the viscosity and thus energy requirements reasonably low during the blending operation.

To avoid problems encountered with compounding techniques, composites were produced by polymerization of olefin in the presence of the filler material. Two different techniques can be distinguished in this respect: a) polymerization of olefin in the presence of filler using a catalyst system in a solvent or diluent; and b) polymerization of olefin in the presence of a filler which acts as a support material for the catalyst system. The composite materials produced by method a) may contain high amounts of fillers, yet the polymerization takes place in the homogeneous phase and, accordingly, there may be a separation between the polymer matrix and the filler, especially when the polymer is formed as solid particles. Method b) generally has a low catalyst efficiency as expressed in grams of polymer formed per g of transition metal catalyst used, which may render the color of the composites unacceptable for certain commercial applications due to high amounts of catalyst residues and makes the composite materials more expensive. Furthermore, method b) often provides composite materials containing very high molecular weight polymers which materials as such are unsuitable for most of the processing techniques for producing shaped articles.

F. S. Dyachkovskii in Trends in Polymer Science, vol. 1, No. 9, September 1993, pages 274-280 discloses the formation of polymers directly on the surface or in the pores of a filler. A survey of various filled polyolefin composites is given.

U.S. Patent 4,187,210 describes the production of highly filled polyolefin composites using a catalyst supported on a filler. The polymer matrix, however, is ultra high molecular weight polyethylene, as explained in the related publication Howard E.G. et al., Ing. Eng. Chem. Prod. Res. Dev., 20, 421 (1981). The composites described therein are difficult to process by techniques such as injection molding due to too high viscosities (molecular weights) and the catalyst efficiencies calculated on a transition metal basis are low. The high molecular weight could be reduced to some extent, however, the high amount of hydrogen required for this purpose renders the process unpractical as the already low catalyst efficiency is further reduced.

EP-A-0,063,459 describes a process for making polyolefin composites containing from 10 to 90 weight percent filler material, comprising the steps of 1) treating a filler with a) an organic magnesium halide or b) an organic magnesium compound followed by a halogen-containing compound, 2) adding a transition metal compound, effecting polymerization of at least one olefin in the presence of the product of step 2) and an organic compound of aluminum, an organic compound of a non-transition metal of Group 2A, or a complex of an organic compound of a non-transition metal of Group 1A or 2A together with an organic compound of aluminum, and terminating the polymerization at the desired filler level. The catalyst efficiency expressed per g of transition metal in this process is, however, low and the molecular weight of the polymer is not appreciably affected by the presence or absence of hydrogen.

Damyanov et al. in Eur. Polym. J. Vol. 24, No. 7, pp. 657-660, 1988 describes a process for making composite materials by activating a filler at room temperature in an isooctane solution by treatment with diethyl aluminum chloride, followed by deposition of titanium tetrachloride on the surface of the thus treated filler at 60°C for 20 minutes. After cooling to room temperature the cocatalysts diethyl aluminum chloride and diphenyl magnesium were added to achieve the desired AI/Ti and Mg/Ti levels. The polymer composites produced by this process, however, have a very high molecular weight and are difficult to process into shaped articles. In order to process these composites blending with additional non-filled polyethylene was recommended.

It is desirable to provide a process for the production of olefin polymer composites in which process the filler is covered by polymer, the molecular weight of the polymer can be controlled, good catalyst efficiencies can be obtained, and the polymer can be obtained as free flowing particles. It is further desirable to provide such composites that are processable to shaped articles by conventional processing techniques such as injection molding, rotational molding, compression molding, profile extrusion, flat-die film extrusion, and coextrusion.

The present invention provides a process for the production of polyolefin composites comprising olefin homopolymer or interpolymer and filler, which process comprises polymerizing one or more olefins in the presence of:
A. a transition metal catalyst containing filler composition obtained by combining under an inert atmosphere in a diluent a dehydrated filler containing from 0.001 to 10 mmol surface-hydroxyl groups per gram of filler with:
   i) an organoaluminum compound;
   ii) an organomagnesium compound which can be transformed into magnesium halide by halogenation;
   iii) a halogenating agent capable of halogenating the organomagnesium compound of ii);
   iv) a Group 4, 5, or 6 transition metal compound; and
   v) an organoaluminum reducing agent capable of reducing the Group 4, 5, or 6 transition metal compound of iv);
   with the proviso that halogen containing components and the organomagnesium compound of ii) are employed in such quantities as to give a halogen:magnesium atomic ratio of at least 2, the dehydrated filler and the organoaluminum compound i) are employed in such quantities that the mole ratio of organoaluminum compound i) to surface hydroxyl groups of the dehydrated filler Is from 0.01 to 1, and the reducing agent v) is added subsequent to the transition metal compound iv) and,
B. a cocatalyst or activator for the transition metal catalyst; and terminating the polymerization when a sufficient quantity of olefin or olefins has been polymerized to obtain a polyolefin composite comprising from 95 to 5 percent by weight of olefin homopolymer or interpolymer and from 5 to 95 percent by weight of filler.

According to a further aspect the present invention provides shaped articles made from a polyolefin composite according to the present invention.

According to yet a further aspect the invention provides a transition metal catalyst containing filler composition useful in the production of polyolefin composites, which composition is obtained by combining under an inert atmosphere in a diluent a dehydrated filler containing from 0.001 to 10 mmol surface-hydroxyl groups per gram of filler with:
i) an organoaluminum compound;
ii) an organomagnesium compound which can be transformed into magnesium halide by halogenation;
iii) a halogenating agent capable of halogenating the organomagnesium compound of ii);
iv) a Group 4, 5, or 6 transition metal compound; and
v) an organoaluminum reducing agent capable of reducing the Group 4, 5, or 6 transition metal compound of iv);
with the proviso that halogen containing components and the organomagnesium compound of ii) are employed in such quantities as to give a halogen:magnesium atomic ratio of at least 2, the dehydrated filler and the organoaluminum compound i) are employed in such quantities that the mole ratio of organoaluminum compound i) to surface-hydroxyl groups of the dehydrated filler is from 0.01 to 1, and the reducing agent v) is added subsequent to the transition metal compound iv); and recovering the composition.

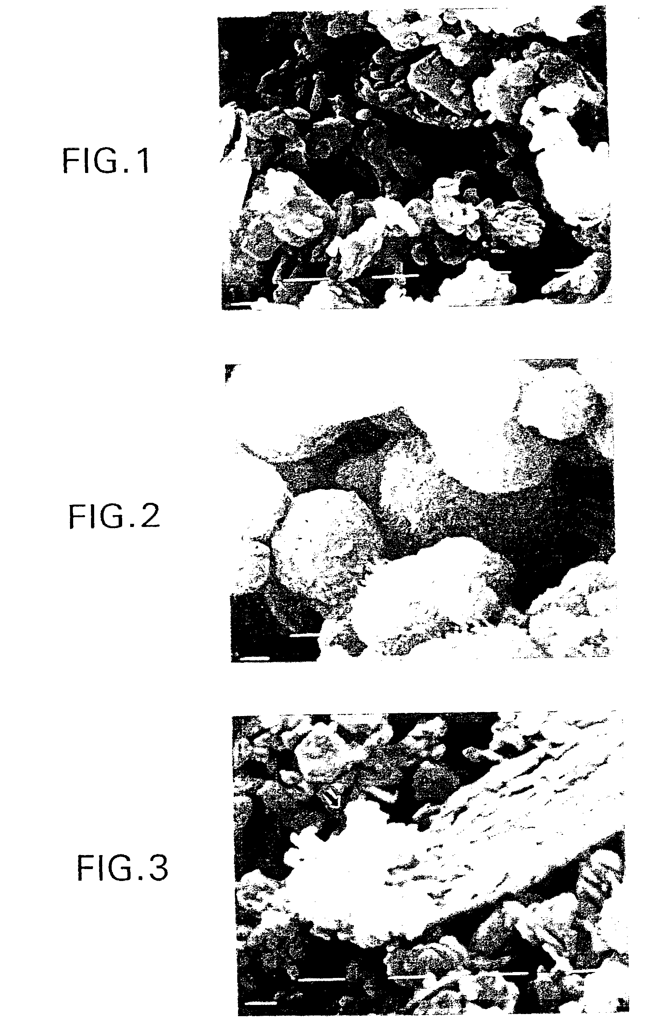

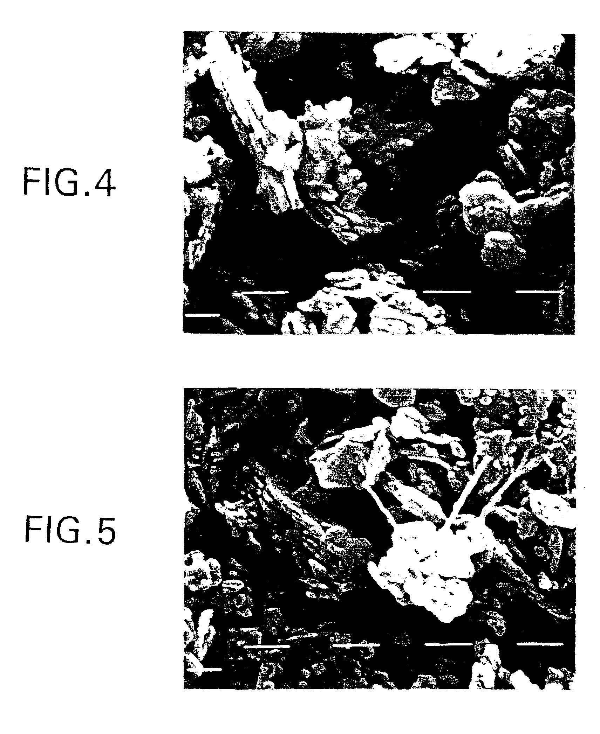

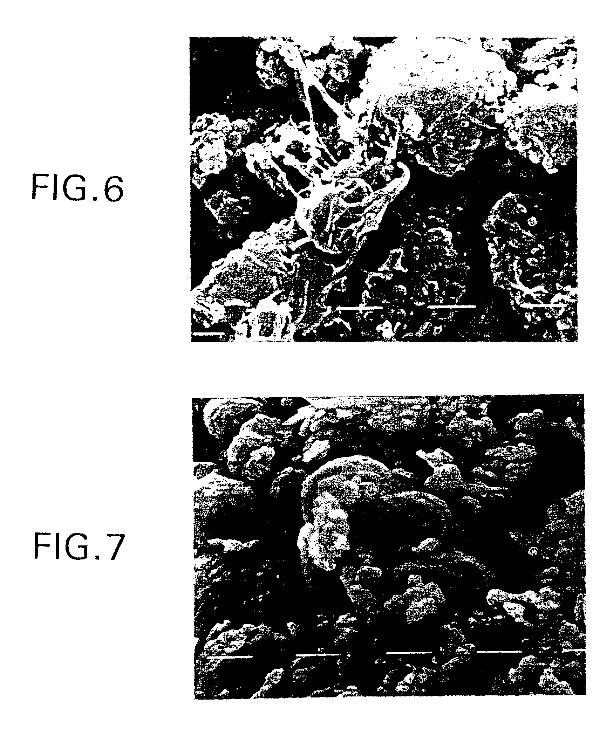

In the drawings, the figures represent Scanning Electron Micrographs of a filler material Satintone™ W/W alone (Figure 1), of polyethylene prepared in the absence of filler with a slurry polymerization process (Figure 2), of polymer composites of the present invention containing 10 percent polyethylene (Figure 3), 20 percent polyethylene (Figure 4), 30 percent polyethylene (Figure 5), and 68 percent polyethylene (Figure 6), and of a comparative polymer composite prepared in the presence of a filler using a Ziegler catalyst not anchored on the filler containing 70 percent polyethylene (Figure 7). The micrographs were magnified by a factor of 10,000, except for Figures 4 and 7, which were magnified 5,000 times.

All references herein to elements or metals belonging to a certain group refer to the Periodic Table of the Elements published and copyrighted by CRC Press, Inc., 1989. Also any reference to the Group or Groups shall be to the Group or Groups as reflected in this Periodic Table of the Elements using the IUPAC system for numbering groups. The term hydrocarbyl as employed herein means any aliphatic, cycloaliphatic, aromatic group or any combination thereof.

The fillers containing surface-hydroxyl groups that may be used in the present invention include a wide variety of organic and inorganic materials. The nature of the filler is not critical as long as it contains surface hydroxyl groups. The term surface hydroxyl group includes hydroxyl groups present in pores and caves of the filler. The shape of the filler is not critical and it may be particulate, plate-like or fibrous. Examples of organic fillers include polymeric fillers such as polysaccharides, starch, cellulose and derivatives thereof. Representative examples of inorganic fillers include metals, metal oxides, metal carbonates, carbonaceous substances, various ceramics, and organic pigments. The metals include aluminum, nickel, iron, and tin. The metal oxides include alumina, titania (for example, rutile and anatase), zirconia, silica such as sand, diatomaceous earth and pumice, iron oxide, and also silica-aluminas, mica and ferrite. The metal carbonates include calcium carbonate, zinc carbonate and barium carbonate. The carbonaceous substances include carbon black, graphite, active carbon and carbon fibers.

A particularly preferred class of fillers is that of aluminum silicate clays of the formula Al₂O₃.xSiO₂.nH₂O where x is 1 to 5 and n is 0 to 4. Suitable aluminum silicate clays include kaolinite, attapulgite, fuller's earth and betonite. The preferred clays are kaolinites such as Georgia Kaolin Company's "Hydrite" MP (calcinated); Engelhard Minerals Company's "ASP" 100 and 400 (calcinated); Engelhard's "Satintone" W/W (calcinated); Engelhard's "Satintone" 5 (calcinated); Engelhard's "Satintone" plus (calcinated). These clays generally have an average particle size of about 0.1 to 44 µm.

The filler used in the invention should be substantially free of absorbed water, which means that it should contain less than 1 mmol absorbed water per gram of filler. Typically, dehydration is effected by drying at elevated temperature, reduced pressure, a chemical dehydration treatment, or a combination thereof. The dehydrated filler containing surface-hydroxyl groups has preferably a neutral to acidic surface. This means that a suspension of the filler in water exhibits a pH of around 7 or less. Many fillers such as alumina hydrates, silicas, titania, zinc oxide, iron oxide, insoluble calcium phosphates and mixture thereof have neutral to acidic surfaces. Other fillers such as calcium carbonate, calcium sulfate, barium sulfate, zinc carbonate and dawsonite are basic in nature. Basic fillers can be provided with a neutral-to-acidic surface by coating the filler with an acidic oxide such as silica, alumina, and acid phosphate. Typically such an acidic oxide coating can be obtained by treating the filler with a compound which can be hydrolyzed to an acidic oxide. By simply mixing an aqueous suspension of the filler with an aqueous solution of an aluminum salt, carbonate fillers can be coated. Another coating method involves treating the filler with an aqueous salt solution and ammonia. Acid phosphate coatings can be obtained by treatment with phosphoric acid; and silica coatings by treatment with silicon tetrachloride and ammonia.

The fillers used in the invention generally have an average particle size of from 0.01 µm to 1 mm as determined by sieve analysis and a specific surface area of from 0.5 to 100 m²/g as determined by BET analysis. Preferably, the average particle size is from 0.1 µm to 0.1 mm and the specific surface area from 0.5 to 50 m²/g. The surface hydroxyl content varies from 0.001 to 10 mmol hydroxyl groups per g of filler, preferably from 0.01 to 5 mmol hydroxyl groups per g of filler.

In the process of the present invention the filler is combined, preferably first, with i) an organoaluminum compound in a suitable diluent. It has been found that treatment of the surface-hydroxyl groups containing filler with the organoaluminum compound, optionally assisted by an organomagnesium compound ii), provides a good dispersion of the filler in hydrophobic media which are typically employed in the present process. Hydrophilic fillers in hydrophobic media tend to agglomerate, possibly by condensation of hydroxyl functions. Treatment with the said organoaluminum compound prevents agglomeration and improves dispersion of the filler. The deagglomerating or improved dispersing effect of the organoaluminum compound has been tested by sedimentation experiments in heptane. Sedimentation times were measured of fillers treated with different amounts of organoaluminum and of untreated fillers. For the same filler, small amounts of organoaluminum compound resulted in increased settling times with respect to untreated filler. The increase in settling time demonstrates the improved dispersion or deagglomeration of the filler.

Suitable organoaluminum compounds include trialkyl aluminum, dialkyl aluminum hydride, dialkyl aluminum alkoxide, and dialkyl aluminum monohalide, wherein the alkyl groups independently contain from 1 to 10 carbon atoms. Highly preferred are trialkyl aluminum compounds containing from 1 to 4 carbon atoms, such as triisobutyl aluminum and triethyl aluminum.

The organomagnesium compound ii) is preferably hydrocarbon soluble. Preferred hydrocarbon soluble organomagnesium compounds are of the formula

R₂₋ₙMgXₙ.xMR'_{y}

wherein R independently each occurrence is a hydrocarbyl group having from 1 to 20 carbon atoms, X independently each occurrence is halo or hydrocarbyloxy with from 1 to 20 carbon atoms in the hydrocarbyl part thereof, n is from 0 to 2 with the proviso that if X is halo n is at most 1, M is aluminum, zinc or boron, R' independently each occurrence is hydrogen, hydrocarbyl having from 1 to 20 carbon atoms or hydrocarbyloxy with from 1 to 20 carbon atoms in the hydrocarbyl part thereof, y has a value equal to the valence of M, and x has a value from 0 to 10. Using a hydrocarbon soluble organomagnesium compound allows the treatment to occur in the same hydrocarbon solvent as may be used in previous and subsequent steps to prepare the transition metal catalyst containing filler composition. Hydrocarbon solvents can easily be removed from the filler composition and leave no deleterious residues when the filler composition is recovered in free flowing form.

Hydrocarbon insoluble magnesium compounds can be rendered hydrocarbon soluble by combining the magnesium compound with a compound MR'_{y} in an amount sufficient to render the resulting complex hydrocarbon soluble, which requires usually not more than about 10, preferably not more than about 6, more preferably not more than about 3 moles of MR'_{y} per mole of magnesium compound.

More preferably, the organomagnesium compound is of the formula R₂₋ₙMgXₙ₋xMR'_{y} wherein R independently each occurrence is a hydrocarbyl group having from 1 to 10 carbon atoms, X independently each occurrence is hydrocarbyloxy with from 1 to 10 carbon atoms in the hydrocarbyl part thereof, n is from 0 to 2, M is aluminum, R' independently each occurrence is hydrocarbyl with from 1 to 10 carbon atoms in the hydrocarbyl part thereof, y is 3, and x has a value from 0 to 6. Most preferred compounds MR'_{y} are the trialkyl aluminum compounds.

Examples of specific organomagnesium compounds are diethyl magnesium, di-n-butyl magnesium, n-butyl s-butyl magnesium, n-butyl ethyl magnesium, n-butyl octyl magnesium, n-butyl magnesium butoxide, ethyl magnesium butoxide, butyl magnesium ethoxide, octyl magnesium ethoxide, butyl magnesium i-propoxide, ethyl magnesium i-propoxide, butyl magnesium n-propoxide, ethyl magnesium n-propoxide, s-butyl magnesium butoxide, butyl magnesium 2,4-dimethyl-pent-3-oxide, n-butyl magnesium octoxide, s-butyl magnesium chloride, n-butyl magnesium chloride, ethyl magnesium chloride, butyl magnesium bromide, octyl magnesium chloride, ethyl magnesium bromide, and s-butyl magnesium bromide. Not all alkyl magnesium halide compounds are soluble in hydrocarbons and thus it may be necessary to employ a polar solvent in order to dissolve them.

Most preferably, the organomagnesium compound is of the formula R₂Mg.xMR'_{y}, and R independently each occurrence is an alkyl group having from 2 to 8 carbon atoms, and M, R', x, and y are as defined previously. Highly preferred compounds are selected from diethyl magnesium, n-butyl s-butyl magnesium, n-butyl ethyl magnesium, and n-butyl octyl magnesium.

The organoaluminum compound i) and the organomagnesium compound ii) can be added to the filler in arbitrary order or simultaneously. It is preferred however, to add the organomagnesium compound ii) subsequent to organoaluminum compound i). Advantageously, both compounds are used as a solution in a hydrocarbon.

Halogenating agent iii), as will be explained below, may be the same as organometallic reducing agent v) if the latter contains transferable halide groups and has halogenating capability. Suitable halogenating agents include hydrogen halides, silicon halides of the formula R"'_{b}SiX⁻_{4-b} wherein R"' is hydrogen or hydrocarbyl, X⁻ is halogen and b is 0, 1, 2 or 3, carboxylic acid halides, hydrocarbyl halides, boron halides, phosphorus pentachloride, thionyl chloride, sulfuryl chloride, phosgene, nitrosyl chloride, a halide of a mineral acid, chlorine, bromine, a chlorinated polysiloxane, a hydrocarbyl aluminum halide, aluminum trichloride and ammonium hexafluorosilicate.

Preferably, the halogenating agent is selected from alkyl aluminum halides, advantageously alkyl aluminum mono-, sesqui- or dihalides, hydrogen halides, silicon halides, and boron halides. Advantageously, the halogenating agent is a chlorinating agent. Most preferably it is hydrogen chloride or an alkylaluminum mono-, di- or sesquichloride. High purity anhydrous hydrogen chloride may be used. If hydrogen halide, especially hydrogen chloride, is used as halogenating agent, the by-products of the halogenation step are alkanes which can be easily separated from the filler composition as they are typically gasses. Some of the halogenating agents, such as alkyl aluminum halides, are strong reducing agents and their presence during the addition of the Group 4, 5 or 6 transition metal compound, as will be discussed hereinafter, can lead to reduction of this compound in solution and not on the support which is less desirable. Therefore, if a halogenating agent is used that also has reducing capabilities, it is preferably added subsequent to the Group 4, 5 or 6 transition metal compound.

Although at lower amounts of halogenating agent improvements can be obtained with respect to lower halide residues in the filler composition and the polymer composite, typically the amount of halogenating agent is sufficient to convert substantially all of organomagnesium compound ii) to magnesium dihalide, that is, the halogen:magnesium atomic ratio is at least 2.

Preferably, the halogenating agent is added subsequent to organomagnesium compound.

The filler composition described above can be separated from the solvent or diluent and dried and stored for extended periods of time. When desired, this dried filler composition can be combined with further components, as described hereinafter.

The Group 4, 5, or 6 transition metal compound iv) employed in the invention is typically a compound of titanium, zirconium, vanadium, or chromium. The Group 4, 5, or 6 transition metal compound employed in the present invention preferably is a halide, hydrocarbyloxide or mixed halide/hydrocarbyloxide of titanium, zirconium, hafnium, or vanadium.

Suitable Group 4 transition metal compounds are represented by the formula MX₄₋ₐ(OR)ₐ, wherein M is titanium, zirconium or hafnium, each R is independently an alkyl group having from 1 to 20, preferably from 1 to 10, more preferably from 2 to 8 carbon atoms; X is a halogen atom, preferably chlorine; and a has a value from 0 to 4. Particularly suitable titanium compounds include, for example, titanium tetrachloride, titanium tetraisopropoxide, titanium tetraethoxide, titanium tetrabutoxide, titanium tri-isopropoxide chloride, and combinations thereof. Analogous zirconium and hafnium compounds are also suitable.

Suitable Group 5 transition metal compounds preferably are vanadium compounds such as those represented by the Formulas VX₄ and V(O)X₃, wherein each X is independently OR or a halogen atom, preferably chlorine, and each R is independently an alkyl group having from 1 to 20, preferably from 2 to 8, more preferably from 2 to 4, carbon atoms. Particularly suitable vanadium compounds include, vanadium tetrachloride, vanadium trichloride oxide, vanadium triethoxide oxide, and combinations thereof.

Suitable Group 6 transition metal compounds include chromium compounds such as chromium nitrate, chromium acetate, chromium trioxide, and mixtures of two or more said chromium compounds.

Most preferred transition metal compounds include chloride, alkoxide or mixed chloride/alkoxide of titanium or vanadium.

Mixtures of Group 4 and 5 transition metal compounds, preferably of titanium and vanadium, may be employed to control molecular weight and molecular weight distribution of the polymers produced.

Preferred reducing agents v) include, for example, alkyl aluminum and alkyl aluminum halide compounds. More preferably the reducing agent is selected from trialkyl aluminum, dialkyl aluminum halide, alkyl aluminum dihalide, or a combination thereof. The halide is preferably chloride. Particularly suitable reducing agents include triethyl aluminum, trimethyl aluminum, tri-isobutyl aluminum, ethyl aluminum dichloride, ethyl aluminum sesquichloride, diethyl aluminum chloride, isobutyl aluminum dichloride, diisobutyl aluminum chloride, octyl aluminum dichloride, and combinations thereof.

As mentioned above, the reducing agent may also contain halogen functionalities, so that the reducing agent is capable of both halogenating the organomagnesium compound ii) and reducing the Group 4, 5, or 6 transition metal compound. In this way, one component less can be added which simplifies the present process.

In a preferred embodiment of the present process the transition metal catalyst containing filler composition is obtained by combining a dehydrated filler containing surface-hydroxyl groups and having a neutral to acidic surface with:
i) a trialkyl aluminum compound;
ii) an organomagnesium compound of the formula R₂Mg.xMR'_{y}, wherein R independently each occurrence is an alkyl group having from 2 to 8 carbon atoms and M, R', x, and y are as defined previously;
III) a halogenating agent capable of halogenating the organomagnesium compound of II)
iv) a Group 4, 5, or 6 transition metal compound; and
v) an organometallic reducing agent capable of reducing the Group 4, 5, or 6 transition metal compound iv) which reducing agent is selected from alkyl aluminum dihalide, dialkyl aluminum halide, or a combination thereof. When using one of the above halogen-containing organometallic reducing agents, no separate halogenating agent iii) is necessary.

The filler composition which contains the transition metal catalyst may be recovered from the diluent by any suitable method, such as filtration and evaporization at elevated temperatures, reduced pressure, or a combination thereof. Alternatively, the filler composition in the diluent can be used together with a cocatalyst or activator in the polymerization of olefin to give a polymer composite.

When it is desired to prepare polymer composites containing an olefin polymer with a high degree of stereospecificity, the present process may comprise the further step of adding an electron-donor compound. Suitable electron donors are esters, ethers, ketones, alcohols, lactones, ortho-esters, thioethers, thioesters, thiols, sulphones, sulphonamides, a fused ring compound containing a heterocyclic sulfur atom, an organic silicon compound such as silane or siloxane, an amide or a derivative thereof, or an organic phosphorus compound. The electron-donor compound can be added simultaneously with or after addition of the magnesium compound.

In the process of the present invention the mole ratio of organoaluminum compound i) to hydroxyl groups on the dehydrated filler is from 0.01 to 1, and is preferably from 0.01 to 0.4, more preferably from 0.01 to 0.2. Below 0.01 the filler particles are not sufficiently deagglomerated and there will remain too many free hydroxyl groups which deactivate the catalyst by hydrolysis. Above 1 the transition metal compound iv) may be overreduced to a valence that produces no active catalytic complex, and the costs of the catalyst are increased.

In general, the mole ratio of organomagnesium compound ii) to hydroxyl groups of the filler is less than 1, preferably between 0.01 and 0.4, more preferably from 0.02 to 0.3.

The amount of hydroxyl groups on the filler can be determined by a volumetric titration of the amount of alkane evolved from the reaction between the hydroxyl groups and an excess of an alkyl metal compound such as triethyl aluminum.

The organomagnesium compound ii) and the Group 4, 5, or 6 transition metal compound iv) are advantageously employed in such quantities as to give a magnesium:transition metal atomic ratio in the filler composition of from 1:5 to 100:1. More preferably, the magnesium:transition metal atomic ratio in the filler composition varies from 1:1 to 50:1. A too low ratio results in a low transition metal efficiency, and a too high ratio increases the cost of the catalyst.

The reducing agent v) and the Group 4, 5, or transition metal compound are preferably employed in such quantities as to give in the filler composition an aluminum:transition metal atomic ratio of from 2:1 to 500:1, and more preferably of from 5:1 to 150:1. At too low amounts of reducing agent the transition metal compound will not be sufficiently reduced, giving a less active catalyst, and at too high ratios the cost of the catalyst will increase without improving catalytic activity.

The ratio of the total of halogen groups in the components of the catalyst system, that is components i), ii), iii), iv), and v), to the organomagnesium compound ii) is generally such as to give a halogen:magnesium atomic ratio of from 2:1 to 20:1, and more preferably from 5:1 to 15:1.

Generally, in the present process the filler is first slurried in an appropriate diluent. Suitable concentrations of filler in the diluent range from 1 to 30, preferably from 5 to 20 percent by weight. Preferably a hydrocarbon diluent is used for this purpose.

The order of adding the organoaluminum compound i), the organomagnesium compound ii), the halogenating agent iii), the Group 4, 5, or 6 transition metal compound iv), the reducing agent, and the electron-donor compound is not critical, provided that the reducing agent v) is added subsequent to the transition metal compound.

Preferably, all of the components used, except for the filler, are used in a liquid or dissolved form which allows the catalyst to be formed on or anchored onto the surface of the filler. If a liquid component is used, a separate solvent is not required. Suitable hydrocarbon media which can be employed to slurry the filler and to serve as diluent or solvent for any of the other components include aliphatic hydrocarbons, cycloaliphatic hydrocarbons, aromatic hydrocarbons, naphthenic hydrocarbons, and combinations thereof. Preferred aliphatic hydrocarbons include pentane, isopentane, hexane, heptane, octane, isooctane, nonane, isononane, decane, and mixtures thereof. Suitable cycloaliphatic hydrocarbons are cyclopentane, cyclohexane, methylcyclohexane, cycloheptane, and cyclooctane. Preferred aromatic hydrocarbons include benzene, toluene, xylenes. The most preferred hydrocarbon diluent is an aliphatic or cycloaliphatic hydrocarbon having from 6 to 8 carbon atoms.

The contact time employed in any step of the present process is not critical but is usually from 0.1 to 100, preferably from 0.5 to 20, and more preferably from 1 to 10 hours.

The temperature employed in any step of the present process is generally from -60°C to 120°C, preferably from -50°C to 100°C, and most preferably from 20°C to 70°C.

The above-described process steps should be conducted under an inert atmosphere to exclude air (oxygen) and moisture as much as possible. Suitable inert gasses include nitrogen, argon, neon, and methane.

At this point in the process the solvent or diluent can be separated from the transition metal containing filler composition by evaporation, filtration or decantation, and the resulting filler composition can be dried and stored prior to its use. Alternatively, the filler composition can be used without this isolation step. The filler composition is unstable in an atmosphere containing oxygen and moisture and, therefore, storage is preferably under an inert atmosphere, for example nitrogen.

Suitable cocatalysts for use in the present process for producing olefin polymer composites include organometal compounds containing elements from Group 1, 2, 12, or 13, and preferably organometal compounds containing aluminum, boron, zinc or magnesium. Exemplary of cocatalysts of Group 2 and 12 are compounds corresponding to the formula R"ₛMX"₂₋ₛ, wherein M is magnesium or zinc, R" independently each occurrence is hydrocarbyl, X" independently each occurrence is halide or hydrocarbyloxide, and s is a number from 1 to 2. Preferred compounds of this formula are those wherein s is 2. Exemplary of cocatalysts of Group 13 are compounds corresponding to the formula R"_{z}GX"_{3-z}, wherein G is aluminum or boron, R" independently each occurrence is hydrocarbyl, X" independently each occurrence is halide or hydrocarbyloxide, and z is a number from 1 to 3. Preferred compounds of this formula are those wherein z is 2 or 3, most preferably 3. Further suitable cocatalysts include alumoxane compounds. More preferably, the cocatalyst is trialkyl aluminum, dialkyl zinc, or a mixture thereof. Particularly suitable compounds include triethyl aluminum, trimethyl aluminum, triisobutyl aluminum, trihexyl aluminum, trioctyl aluminum, diethyl aluminum chloride, diethyl aluminum ethoxide, diethyl zinc and combinations of two or more of such compounds.

The cocatalyst is generally employed in an amount such as to provide a mole ratio of cocatalyst to transition metal compound of from 1:1 to 1000:1, preferably from 5:1 to 500:1, more preferably from 5:1 to 200:1. The amount of cocatalyst is primarily determined in view of the amounts of impurities present in the polymerization mixture that may have an inhibiting effect on the transition metal catalyst, as well as in view of the required reduction of the transition metal catalyst.

In the present process the transition metal catalyst containing filler composition is used in combination with the cocatalyst or activator to effect polymerization of the one or more olefins to provide polymer composites.

Preferably, in the present process the olefin or olefins are selected from ethylene and α-olefins containing from 3 to 18 carbon atoms. Suitable olefins that can be used include, for examples, ethylene and α-olefins having, preferably from 3 to 12, more preferably from 3 to 8 carbon atoms and combinations of two or more of such olefins. Particularly suitable α-olefins include, for example, ethylene, propylene, 1-butene, 1-pentene, 4-methylpentene-1,1-hexene, 1-heptene, 1-octene, 1-nonene, 1-decene, 1-undecene, 1-dodecene, 1-tridecene, 1-tetradecene, 1-pentadecene, or combinations thereof. Preferably, the α-olefins are ethylene, propene, 1-butene, 4-methyl-pentene-1,1-hexene, 1-octene, and combinations of ethylene and/or propene with one or more of such other α-olefins. Advantageously, an olefin homopolymer is prepared by polymerizing ethylene alone.

The temperature and pressure for carrying out the polymerization reaction are not critical. Preferred polymerization temperatures range from 0°C to 150°C. Preferred pressures range from subatmospheric pressure to 500 bar and higher, but more preferably between 1 and 100 bar. The polymerization may be carried out in a suspension or slurry mode, in the gas phase mode, or in the solution mode. Most preferably, the polymerization is carried out in the slurry or gas phase mode. Advantageously, the temperature of polymerization is from 15°C to 90°C and the polyolefin composite is recovered as a free flowing powder. A slurry process typically uses an inert hydrocarbon diluent and temperatures of from 0°C up to a temperature just below the temperature at which the resulting polymer becomes substantially soluble in the inert polymerization medium. Pressures generally range from 1 to 100 bar. The hydrocarbon diluents suitable for polymerization media are essentially the same hydrocarbons that can be used in the present process for preparing the transition metal containing filler composition, as described above. Typical operating conditions for gas phase polymerizations are from 20°C to 100°C, more preferably from 40°C to 80°C. In gas phase processes the pressure is typically from subatmospheric to 100 bar.

It has been found that in the process of the present invention the molecular weight of the olefin polymer can be controlled by using chain transfer agents, such as hydrogen, and α-olefins, or by varying the temperature of polymerization. Preferably, the polymerization is carried out in the presence of hydrogen as a chain transfer agent. Effective control of molecular weight is achieved when the hydrogen is used in such an amount as to give a hydrogen:olefin partial pressure ratio from 1:20 to 20:1, and more preferably from 1:15 to 4:1.

It has been found that the properties of the polymer composites can be further modified by using in the present process, apart from the transition metal containing filler composition (so a filler-anchored catalyst), a further catalyst system not attached to the filler but present in the polymerization diluent in order to produce, simultaneously or subsequently, polymer in the homogeneous phase. In this way polymer is formed on the filler particles and polymer is formed in the diluent by the further non-attached catalyst system. In this way both good morphological and physical properties can be achieved. Exemplary of such a further catalyst system are those described in U.S. Patent 4,526,943.

In the present process, the polymerization is preferably terminated when a sufficient quantity of olefin or olefins has been polymerized to obtain a polyolefin composite comprising from 75 to 10 weight percent of olefin homopolymer or interpolymer and from 25 to 90 percent by weight of filler. Termination of polymerization is typically effected by adding a polar compound to the reaction mixture to deactivate the catalyst or by exposing the polymerization mixture to air or moisture. The polyolefin composite is then typically recovered by removing the polymerization diluent and drying of the composite to obtain free flowing particles.

In order to further refine properties of the polymer composite mixtures of different types of filler or of different sizes or shapes of filler can be used, or a combination thereof.

According to a further aspect the invention provides a polyolefin composite comprising from 95 to 5, preferably 75 to 10 weight percent of olefin homopolymer or interpolymer and from 5 to 95, preferably 25 to 90 percent by weight of a filler composition, obtained according to the present invention. The composite of the present invention has the filler uniformly dispersed therein irrespective of the filler level and the filler particles are integrated well into the polymer matrix, so that no separation occurs of filler and particles. The composites of the present invention have mechanical and morphological properties which are superior to those of polymer composites obtained by mechanically blending or compounding the filler and polymer, as exhibited by improved tensile and impact strength. The present composites may contain up to high levels of filler and olefin polymers which vary in molecular weight (weight averaged) from relatively low to relatively high. The molecular weights typically lie in the range of 30,000 to 1,000,000, more usually between 50,000 and 500,000. It is an advantage of the present process that molecular weight can be controlled to directly produce, without requiring further blending, polymer composites that can be processed by traditional methods for processing high density olefin polymers, for example injection molding. Melt indices for the polymer composites up to 100 g/10 minutes can be obtained, preferably from 0.01 to 10 g/10 minutes, under a load of 2.16 kg at 190°C. The present composites contain relatively low amounts of catalyst residue, for example, transition metal and halogen residues.

According to a further aspect the present invention also relates to shaped articles made from the polyolefin composite according to the invention. The present composites may be used as such for producing shaped articles or can be blended with other polymers first. Blending can be effected in conventional blending equipment, such as tumble mixers, extruders, and melt blenders. If desired, additives can be incorporated in the present composites, such as for example, to improve processability, degradation resistance, crosslinking, or to provide a certain color.

Suitable processing techniques include, depending to a certain extent on the melt index of the polymer composite, injection molding, extrusion, such as profile and flat-die film extrusion, compression molding, and rotational molding.

The present composites can be shaped into a wide variety of different forms, such as sheet, containers, planks, films or pipe.

Having described the invention the following examples are provided as further illustration thereof and are not to be construed as limiting.

### EXAMPLES

In the examples the following fillers were used: Satintone'" W/W and Satintone'" 5 kaolinite which are calcinated aluminum silicates from Engelhard Co., both having flake shaped particles, a surface area of 12 m²/g, a density of 2.63 g/cm³ and a pH of 6, with a number averaged particle size of 1.4 µm for Satintone W/W and 0.8 µm for Satintone 5. Also the mineral barite (BaSO₄) was used as filler. Barite is a block-shaped mineral having a basic pH of 9, a number averaged particle size of 3 pm, and a density of 4.4 g/cm³. Prior to its use it was pretreated with an acid coating. The fillers were used after drying overnight at 100°C and 10⁻² mm Hg pressure.

The barite mineral filler was provided with an alumina surface coating to provide an acidic surface according to the following procedure: 10 g of AlCl₃.6H₂O (0.18x10⁻³ mol of Al/g BaSO₄) was added to a slurry of 231 g BaSO₄ in 2.3 litres of water. Subsequently, 50 mL of NH₃ (25 weight percent in H₂O) was added. Then the slurry was filtered and the solids dried under vacuum at 70°C. The reaction that took place was according to following equation: BaSO₄ + 2AICl₃ + 6NH₃ + 3H₂O → Al₂O₃/BaSO₄ + 6NH₄CI

The hydroxyl content of the Satintone W/W filler was determined by volumetric measurements of ethane emitted from the reaction between the filler and a precise excess of triethylaluminum (TEA) compound according to the following procedure. In a flask equipped with a rubber septum connected to a gas burette through an oil valve and previously flamed and purged with nitrogen, 10.15 g of Satintone W/W, dried at 100°C under reduced pressure (10-2 mm Hg) overnight, was dispersed in 130 ml of dried heptane and kept at -78°C. After addition of 4.02 mol of TEA (4.0 mL; 1.004 M), the reaction mixture was heated to 40°C and kept at that temperature until no further gas evolution was observed. The hydroxyl content was 2.30x10⁻⁴ mol -OH/g of filler. This value was confirmed by the volumetric measurement of the ethane produced by hydrolysis of the unreacted ethyl groups of the TEA excess. Similarly, the hydroxyl content of Satintone'" 5 was measured to be 2.3x10⁻⁴ mol -OH/g of filler, and for the alumina-coated barite 2.4x10⁻⁴ mol -OH groups/g Al₂O₃/BaSO₄.

The filler content of the olefin polymer composites was determined by calcining a known amount of composite in an electrical oven at 500°C for 5 hours, weighing the amount of ash and calculating the filler and polymer content. In the weight of the filler the catalyst residues are included. The amount of catalyst in the ash residue is generally less than 0.1 percent by weight, preferably less than 0.05 percent by weight.

The melting temperature and crystallinity were determined by measuring the endotherms of 10 mg of composite sample using a Dupont DTA 2000 calorimeter. The melting temperature and crystallinity were determined by heating the sample up to 190°C at 20°C/minute, cooling the sample to room temperature, and heating it up again to 190°C at a heating rate of 20°C/minute. The endotherms were recorded during the second heating cycle. The heat of fusion of a perfect HDPE crystal, used in the crystallinity determination was taken as 2.93x10⁵ J/Kg. Melting temperature was determined from the temperature at the peak of the melting endotherm.

Melt flow values were measured according to ASTM D 1238 at 190°C using a CEAST 6543 apparatus. Three different loads were used: 2.16 kg, 10.00 kg and 21.60 kg, respectively. These are abbreviated by MI₂, MI₁₀, and MI₂₁, respectively.

Impact characteristics were determined according to ASTM D 256B using U-notched specimens on a Charpy CEAST 6546 apparatus. The length, width and thickness of the specimens were 50 mm, 6 mm, and 2 mm, respectively. The depth of the notch was 0.35 mm, The testing was carried out at room temperature and repeated for 5 samples and the average value calculated. The energy of the hammer was 4 J.

Tensile properties were determined according to ASTM D 253 using dumbbell shaped samples on an Instron DY.24 apparatus. Tensile rate was 20 mm per minute and the length, width and thickness of the dumbbell samples were 19 mm, 5 mm and 2 mm, respectively. The testing was carried out at room temperature and an average value for 5 samples was recorded.

The test specimens were cut out of plates of polymer composite prepared as follows. Powderous composite, as obtained from polymerization was melted at 190°C in a two-roll mill and compression molded at 200°C for 3 minutes into 2 mm thick plates prior to quenching with circulating cold water.

In the following tables, the results are expressed as follows: All percentages are expressed as weight percentages, unless indicated otherwise. F.L. is the filler level in weight percent of the polyolefin composite. The transition metal concentration [M] is expressed as gramatoms of transition metal per 20 g of filler. The catalyst efficiency CE is expressed in kg olefin polymer per g transition metal per hour, abbreviated as kg PE/(g M.h). The polymerization time T is expressed in minutes. The peak melting temperature mp is expressed in °C, and the crystallinity level Xc in weight percent. The modulus E is expressed in GPa; the tensile strength at break TS_{b} in MPa and elongation at break E_{b} in percent; the tensile strength at yield TSy in MPa, and elongation at yield Ey in percent. The impact energy I.E. is expressed in KJ/m². The melt indices are expressed in g/10 minutes.

In each of the following examples, unless otherwise stated, the catalyst components were mixed in inert atmosphere excluding moisture and oxygen.

During polymerization two different conditions were used with respect to purity of the ethylene and hydrogen gasses used:

Condition A: ethylene gas (N 35 from Air Liquide, purity of 95.5 percent) and hydrogen gas (N 30 from Air Liquide, purity of 99.9 percent) were used. The condition required less severe working conditions;

Condition B: ethylene gas (N 35 from Air Liquide) and hydrogen gas (N 50 from Air Liquide, purity of 99.999 percent) were additionally purified by passing them through a 4A molecular sieve column.

### Example 1

250 mL of dry and deoxygenated n-heptane were added to 20 g of Satintone W/W which had been dried at 100°C for 18 hours under 10⁻² mmHg pressure. At room temperature, to the stirred mixture were added successively: 1.6 mL of 0.1 mol/litre of TEA solution in n-heptane (1.65x10⁻⁴ mol); 0.5 ml of 0.643 mol/litre of butyl octyl magnesium (BOMAG) solution in n-heptane (3.29x10⁻⁴ mol) to give an organoaluminum to surface-hydroxyl mol ratio of 0.035 and an organomagnesium to surface-hydroxyl mol ratio of 0.07. The temperature was then raised to 40°C for 0.5 hours and the ethane gas pressure was released and replaced by inert gas. At room temperature, to the stirred mixture were then added: 0.5 mL of 0.049 mol/liter of tetrabutoxy titanium (TBT) solution in n-heptane (2.45x10⁻⁵ mol), and 1.8 mL of 0.916 liter mol ethyl aluminum dichloride (EADC) in n-heptane (1.65x10⁻³ mol). The mixture was stirred for 18 hours. In the foregoing procedure, there was used 1.22x10⁻⁶ gramatoms of titanium for each gram of Satintone W/W. The Al/Ti/Mg/CI/OH atomic ratio (OH represents the total amount of available hydroxyl groups) for this transition metal catalyst containing filler composition is 55/0.75/10/100/140.

The polymerization was carried out at 60°C under Condition B using 4 bar hydrogen pressure and 4 bar ethylene pressure feeding in a 2-litre zipperclave reactor from Autoclave Engineers Europe. The transition metal filler suspension as prepared above was added to 1.4 litres of dry and oxygen free n-heptane containing 1.14x10⁻³ mol of triethylaluminum compound and produced 41.5 g of polyethylene. The polyethylene composite contained 32.5 percent of filler and the catalyst efficiency was calculated to be 157 kg PE/(gTi.h). The Al/Ti/Mg/CI/OH ratio in the polymerization mixture was 120/0.75/10/100/140. The results are incorporated in the following table.

| Run No. | mp | Xc | E | TSy | Ey | TSb | Eb | I.E. | Ml₁₀ | MI₂₁ |
|---|---|---|---|---|---|---|---|---|---|---|
| 1 | 140 | 51 | 2.04 | 121 | 4.5 | 77 | 121 | 77 | 0.3 | 1.7 |

### Comparative Example 1

Example 1 was repeated, but without the addition of BOMAG and now using 0.7 mL of 0.049 mol/litre of tetrabutoxy titanium (TBT) solution in n-heptane (3.28x10⁻⁵ mol). The AI/Ti/Mg/CI/OH atomic ratio was 120/1/0/100/140 after addition of 2.12x10⁻³ mol of TEA cocatalyst. Under the same polymerization conditions except for a hydrogen pressure the catalyst efficiency was 2 Kg PE/(gTi.h). The absence of the organomagnesium compound dramatically influences the catalytic activity. The results are given in the table below.

| Run No. | F.L. | CE | T | mp | Xc | Ml₁₀ | MI₂₁ |
|---|---|---|---|---|---|---|---|
| 1 | 75 | 2 | 62 | 131 | 67 | - | - |

### Comparative Example 2 and Example 2

In Comparative Example 2 ethylene is polymerized in the presence of filler using a catalyst as described in U.S. Patent 4,526,943.

To 70 mL of dry and deoxygenated n-heptane were added successively: 1.04x10⁻³ mol of TEA (1.04 mL; 1.00 mol/litre); 2.08x10⁻³ mol of BOMAG (3.23 mL; 0.64 mol/litre); 7.26x10⁻³ mol of n-propyl alcohol (0.55 mL). The temperature was then raised to 40°C for 0.5 hours, the ethane gas pressure released and replaced by inert gas. To the stirred mixture were then added, at room temperature: 4.15x10⁻⁴ mol of TBT (0.85 mL; 0.49 mol/litre) and, 1.04 10⁻² mol of EADC (11.33 mL; 0.916 mol/litre).

This mixture was stirred for 18 hours. The AI/Ti/Mg/CI/OH ratio is 55/2/10/100/35 respectively. 250 mL of dry and deoxygenated n-heptane were added to a 20 g portion of Satintone W/W which had been dried at 100°C for 18 hours under 10-2 mmHg pressure. Prior to the transfer of this slurry to the reactor, 4.6x10⁻³ mol of TEA (4.60 ml of 1.00 mol/litre) were added to the slurry. The ethane gas produced was purged using nitrogen. An additional 1.5 litres of dry and oxygen free n-heptane were introduced in the reactor.

The polymerization was carried out at 60°C under 2 bars of hydrogen pressure and 4 bars of ethylene pressure and started when 1.5 mL of the catalyst suspension prepared above (containing 9x10⁻⁶ mol of Ti) was added to 1.4 litres of dry and oxygen free n-heptane combining 1.14x10⁻³ mol of TEA compound (1.1 mL; 1 mol/litre). After 23 minute the polymerization was stopped and 48.08 g of polyethylene was produced. The composite composition was 29.4 percent of filler and the catalyst efficiency was of 275 kg/(g/Ti.h).

In the drawings Scanning Electron Micrographs, using a JEOL apparatus, are given for pure Satintone W/W (Figure 1), for ethylene homopolymer produced by a Ziegler catalyst in a slurry polymerization process in the absence of filler (Figure 2), for polymer composites produced according to the present invention with respectively 10,20,30, and 68 percent by weight of ethylene polymer (Figures 3, 4, 5, and 6, respectively), and for the polymer composite produced in Comparative Example 2 (Figure 7). The polymer composites of the present invention containing 10, 20, 30, and 68 percent of polymer were produced by a catalyst as described in example 3, run 2 yet sampling at different polymerization times.

The micrographs show that for the present composite (Figures 3 to 6) the polymer grows on and from the filler particles, and at higher amounts of polymer (30 percent and higher) fibrils joining the different polymer/filler flakes start to form. The filler particles are completely covered with polymer, even for the composites containing a small percentage (10) of polymer. The comparative composite (Figure 7) shows that parts of the filler flakes are not covered by polymer, even at high polymer levels (70 percent).

### Comparative Example 3

Olefin polymer composites having different degrees of filler were prepared by mechanical blending at 190°C using a two-roll mill. Satintone W/W or pretreated barite were used as a mineral filler and high density polyethylene HDPE 10062 having a melt index (MI₂) of 10g/10 minutes and a density of 0.962 (available from Dow Benelux N.V.) was used as matrix. The results are shown in the following table.

| Run No. | Filler | F.L. | E | TSy | Ey | TSb | Eb | I.E. |
|---|---|---|---|---|---|---|---|---|
| 1 | - | 0 | 1.1 | 30 | 7.3 | 14 | 170 | - |
| 2 | Satintone W/W | 7 | 1.4 | 31 | 6.7 | 15 | 139 | 16 |
| 3 | Satintone W/W | 25 | 2.1 | 34 | 5.3 | 27 | 30 | 6 |
| 4 | Satintone W/W | 30 | 1.9 | 31 | 5.8 | 16 | 25 | 7 |
| 5 | Satintone W/W | 32 | 1.8 | 26 | 3.4 | 26 | 7 | 18 |
| 6 | Satintone W/W | 41 | 2.3 | 36 | 4.0 | 33 | 7 | 7 |
| 7 | Satintone W/W | 49 | - | 39 | - | 39 | 4 | 10 |
| 8 | Satintone W/W | 58 | - | 36 | - | 36 | 3 | 10 |
| 9 | Satintone W/W | 67 | - | 39 | - | 39 | 3 | 11 |
| 10 | Barite | 32 | 1.3 | 25 | 2.23 | 12 | 9 | 8 |
| 11 | Barite | 40 | 1.5 | 25 | 1.5 | 10 | 4 | 9 |

### Example 3

Example 1 was repeated using TEA, BOMAG, TBT, and EADC in such amounts as to provide two filler anchored catalysts having a composition of AI/Ti/Mg/CI/OH of 55/2/10/100/70 (run 1) and 55/2/10/100/140 (run 2). Upon addition of TEA cocatalyst to obtain a final composition of 120/2/10/100/70 and 120/2/10/100/140, respectively polymerization took place under Condition A described above with H₂ pressure of 1.5 bar and ethylene feeding of 4 bar. Starting with 20 g of Satintone W/W, the polymerization was stopped when the filler content of the resulting composite was 32 weight percent. The resulting physical and mechanical properties are given in the following table.

| Run | [Ti]x10⁻⁵ | C.E. | T | mp | Xc | TSy | TSb | Eb | I.E. | Ml₁₀ | Ml₂₁ |
|---|---|---|---|---|---|---|---|---|---|---|---|
| 1 | 13.1 | 13.7 | 30 | 133 | 72 | 34 | 17 | 31 | 39 | - | 0.1 |
| 2 | 6.2 | 31.4 | 27 | 135 | 63 | 31 | 15 | 21 | 12 | 0.1 | 1.6 |

### Example 4

Example 1 was repeated except that different amounts of TBT were added to provide titanium-containing filler compositions having AI/Ti/Mg/CI/OH atomic ratios in the range of 120/0.5/10/100/140 to 120/1.5/10/100/140 including addition of from 1.64x10⁻⁴ to 4.0x10⁻³ mole of TEA cocatalyst. The polymerization was conducted under Condition A with H₂ partial pressure of 1.5 bar and ethylene feeding pressure of 4 bar. The results are given in the following table.

| No | F.L. | Al/Ti/Mg120/x/10 | C.E. | T | mp | Xc | TSb | TSb | Eb | I.E. | Ml₁₀ | MI₂₁ |
|---|---|---|---|---|---|---|---|---|---|---|---|---|
| 1 | 34 | 1.50 | 19 | 52 | 139 | 47 | 31 | 30 | 134 | 111 | 0.1 | 0.3 |
| 2 | 34 | 1.00 | 43 | 35 | 138 | 60 | 27 | 26 | 178 | 71 | 0.1 | 0.3 |
| 3 | 34 | 0.75 | 81 | 24 | 136 | 54 | 30 | 33 | 164 | 85 | - | 0.1 |
| 4 | 42 | 0.50 | 30 | 97 | 133 | 53 | 26 | 08 | 6 | 46 | - | - |

### Example 5

Example 1 was repeated using different amounts of TEA, BOMAG, TBT to provide filler-anchored catalysts having a catalyst composition of AI/Ti/Mg/CI/OH atomic ratios in the range 120/0.75/10/100/140 to 120/3.4/10/100/140 including from 1.14x10⁻³ to 11.5x10⁻³ mole of TEA as cocatalyst. The polymerization was conducted under Condition B with a hydrogen partial pressure from 1.5 bar up to 4 bar and ethylene feeding pressure of 4 bar. The results are summarized in the following table.

| No. | PH₂ | Al/Ti/Mg 120/x/10 | C.E. | T | E | TSy | Ey | TSb | Eb | I.E. | MI₁₀ | MI₂₁ |
|---|---|---|---|---|---|---|---|---|---|---|---|---|
| 1 | 1.5 | 0.75 | 119 | 17 | 1.71 | 32 | 5.0 | 5 | 53 | 10 | 0.2 | 0.6 |
| 2 | 2.0 | 0.75¹ | 2 | 298 | - | - | - | - | - | - | - | - |
| 3 | 0.0 | 1.5 | 91 | 13 | 2.68 | 27 | 4.2 | 27 | 271 | - | - | 0.3 |
| 4 | 1.5 | 1.5 | 92 | 14 | 1.6 | 27 | 3.8 | 28 | 175 | - | - | - |
| 5 | 4.0 | 1.5 | 114 | 9 | 1.9 | 31 | 5.8 | 16 | 60 | 13 | 0.9 | 3.5 |
| 6 | 1.5 | 2.0 | 111 | 10 | 1.8 | 28 | 6.1 | 25 | 237 | 73 | 0.3 | 1.1 |
| 7 | 3.0 | 2.4 | 42 | 16 | 2.2 | 32 | 4.1 | 16 | 18 | 5 | 2.1 | 6.7 |
| 8 | 1.5 | 3.4² | 59 | 21 | 1.5 | 26 | 7.7 | 22 | 153 | 65 | 0.2 | 1.7 |

| | | | | | | | | | | | | |
|---|---|---|---|---|---|---|---|---|---|---|---|---|
| 1) Catalyst composition Al/Ti/Mg/Cl/OH = 120/0.75/0.75/100/64 | | | | | | | | | | | | |
| 2) Filler level = 16 wt% instead of 32 wt% | | | | | | | | | | | | |

### Example 6

Example 1 was repeated using different amounts of TEA, BOMAG, TBT to provide filler-anchored catalysts having a catalyst composition of AI/Ti/Mg/CI/OH atomic ratios of 120/2/10/100/140 including 9.75x10⁻³ moles of TEA as cocatalyst. Polymerization-filled composites were prepared under Condition A using a hydrogen partial pressure of 1.5 bar and an ethylene feeding of 4 bar. The results are given in the following table.

| Run No. | Filler used (g) | F.L. | C.E. | T | mp | Xc | TSy | TSb | Eb | I.E. |
|---|---|---|---|---|---|---|---|---|---|---|
| 1 | 35 | 49 | 5 | 58 | - | 53 | 35 | 31 | 9 | 19 |
| 2 | 30 | 58 | 9 | 31 | 139 | 49 | 39 | 37 | 6 | 22 |
| 3 | 35 | 67 | 4 | 31 | 137 | 63 | 34 | 34 | 4 | 40 |

### Example 7

Example 1 was repeated using different amounts of TEA, BOMAG, TBT to provide filler anchored catalysts having a catalyst composition with AI/Ti/Mg/CI/OH atomic ratios of 120/0.75/10/100/140 including 1.1x10⁻³ mole of TEA of as cocatalyst. Polymerization was effected under Condition B with hydrogen partial pressure in the range 0 to 6 bar keeping ethylene feeding to 4 bar to obtain a filler level of 32 percent. The results are described in the following table.

| Run No. | PH₂ | Pₜₒₜ | C.E. | T | E | TSy | Ey | TSb | Eb | I.E. | MI₂ | MI₁₀ | MI₂₁ |
|---|---|---|---|---|---|---|---|---|---|---|---|---|---|
| 1 | 0.0 | 4.0 | 37 | 57 | 1.3 | 23 | - | 35 | 236 | 56 | - | - | - |
| 2 | 1.5 | 5.5 | 148 | 16 | 2.3 | 30 | 7.2 | 29 | 185 | 71 | 0.1 | 0.5 | 1.1 |
| 3 | 3.0 | 7.0 | 96* | 22 | 1.8 | 28 | 5.1 | 14 | 59 | 44 | 0.1 | 0.6 | 2.1 |
| 4 | 6.0 | 10.0 | 295 | 7 | 1.8 | 26 | 5.3 | 14 | 53 | 23 | 0.1 | 1.0 | 4.1 |

| | | | | | | | | | | | | | |
|---|---|---|---|---|---|---|---|---|---|---|---|---|---|
| * polymer accumulated on the stirrer which prevented effective agitation | | | | | | | | | | | | | |

### Example 8

To 20 g of Al₂O₃/BaSO₄ previously dried under reduced pressure (10⁻² mm Hg) for 18 h and slurried in 250 ml of dry and oxygen free n-heptane was added 1.71 ml of 0.1 mol/litre of TEA (0.17x10⁻³ mol) and 0.5 mL of 0.65 mol/litre BOMAG (3.2x10⁻⁴ mol). The slurry was heated up to 40°C for 30 minutes prior to cooling at room temperature and addition *of* 2.46x10⁻⁵ mol TBT (0.5 mL; 4.9x10⁻² mol/litre) and of 1.64x10⁻³ mol of EADC(1.8 mL; 0.91 mol/litre)prior to overnight aging to give an Al/Ti/Mg/Cl/OH atomic ratio of 120/0.75/10/100/140, 20 g of the filler composition thus obtained was used In a polymerization under Condition B and agitation at 60°C in 1.8 litre of dry and oxygen free n-heptane with addition of the 1.14x10⁻³ mol of TEA (0.93 mL; 1.22 mol/litre). The partial pressure in hydrogen was 2 bar and the ethylene feeding was 4 bar. The results are in the following table.

| Run No. | F.L. | C.E. | T | E | TSy | Ey | TSb | Eb | I.E. | MI₂ | MI₁₀ | MI₂₁ |
|---|---|---|---|---|---|---|---|---|---|---|---|---|
| 1 | 32 | 24 | 40 | 1.2 | 26 | 3.3 | 33 | 431 | - | 0.02 | - | 1.05 |
| 2 | 55 | 39 | 19 | - | - | - | - | - | - | 0 | 0 | 0 |

### Example 9

Example 1 was repeated to give an Al/Ti/Mg/Cl/OH atomic ratio of 120/1.5/10/100/140. The polymerization was effected using 20 g of filler composition in the presence of 1-hexene or 1-octene in an amount of 2x10⁻³ mol. 1-hexene or 1-octene was dried according to the method in the following table and was added prior to polymerization to the dry and oxygen free n-heptane. Under Condition B the polymerization was carried out at a partial hydrogen pressure of 4 bar and an ethylene feeding of 4 bar until a 32 weight percent filler level was reached. The results appear in the following table.

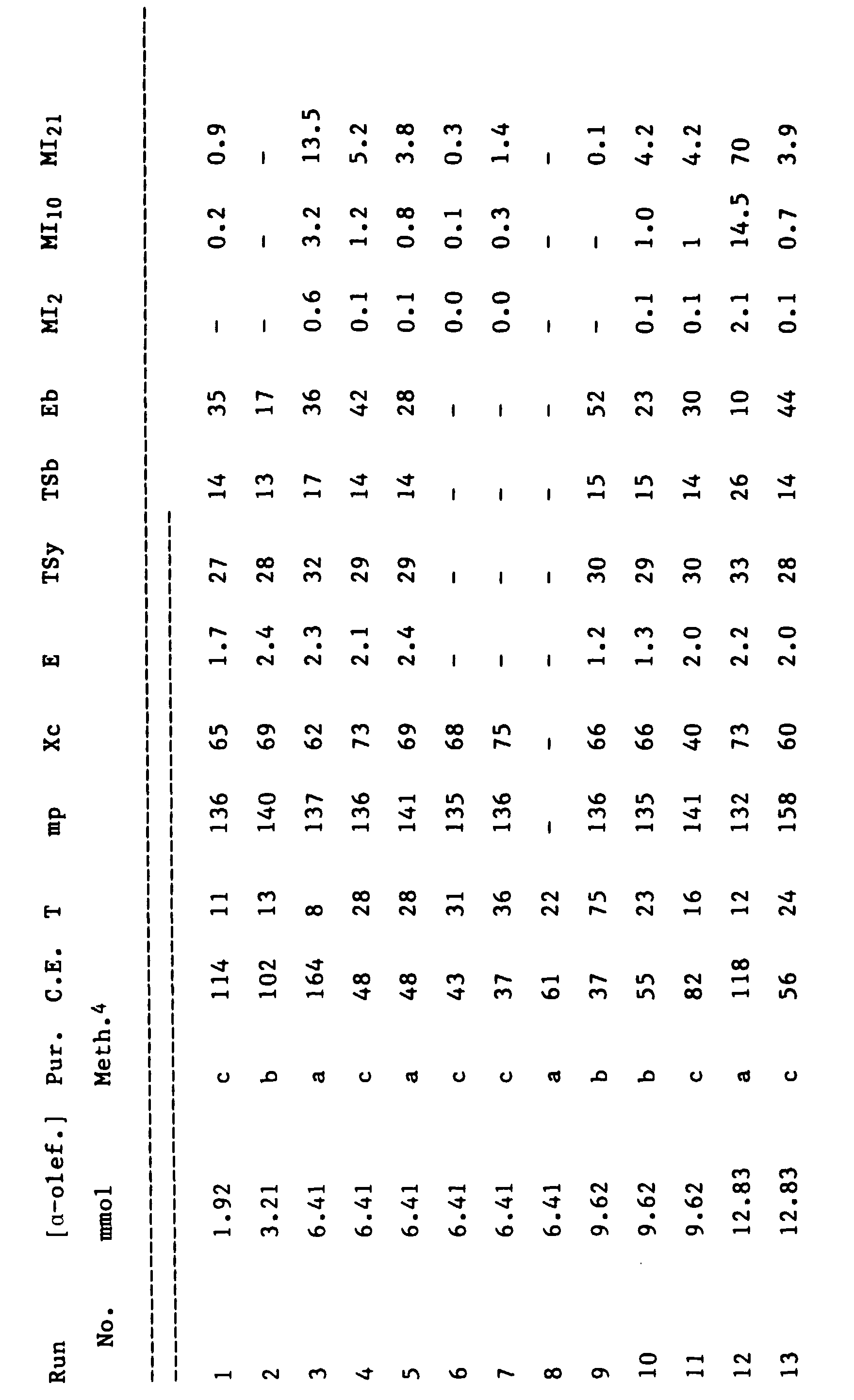

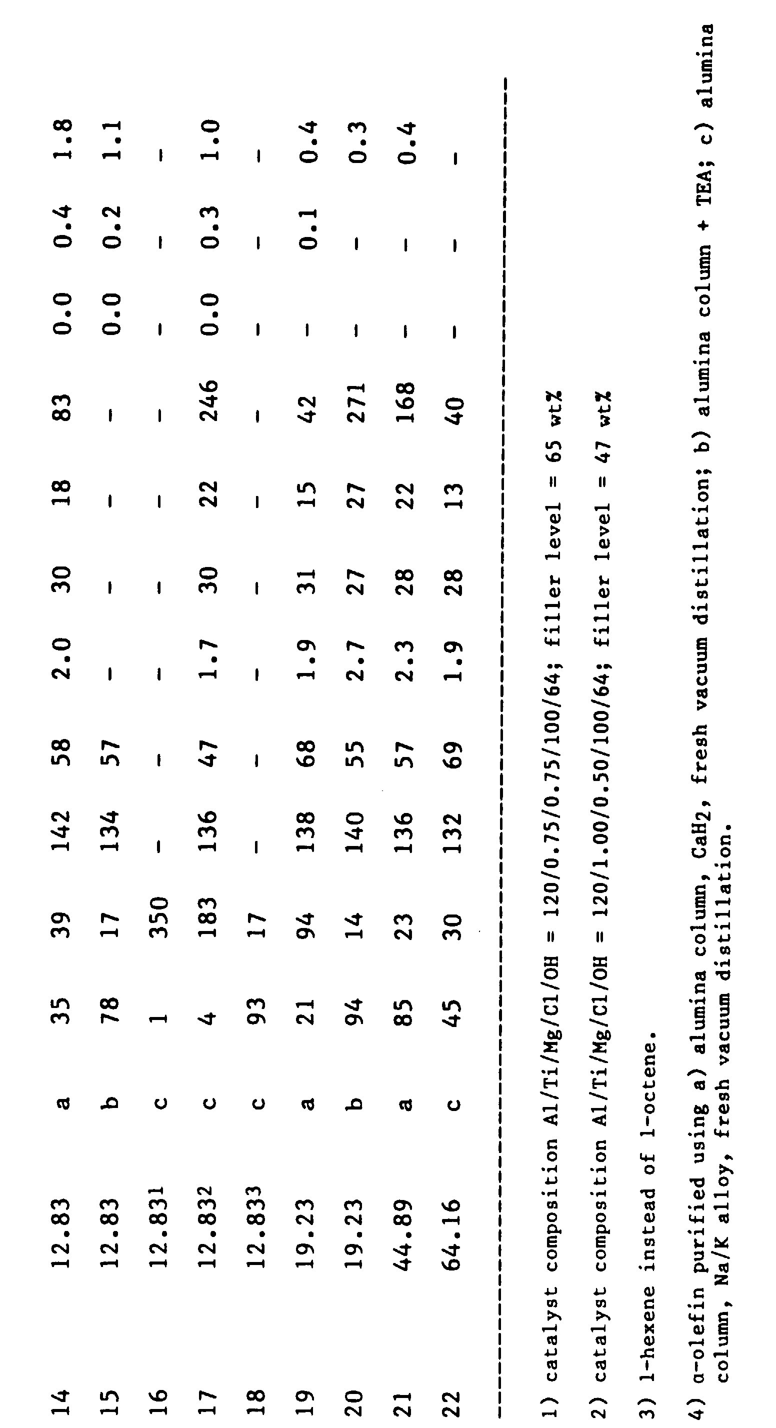

### Example 10

8 g of Satintone W/W-filler composition prepared as described in Example 1 having an AI/Ti/Mg/CI/OH atomic ratio of 55/0.75/10/100/140, were added to an n-propanol based catalyst prepared as described in U.S. Patent 4,526,943 having an AI/Ti/Mg/CI/OH atomic ratio of 120/0.075/10/100/35 and a catalyst efficiency of 2,914 kg PE/(gTi.h). The polymerization started with the addition of ethylene (5 bar) subsequently to the TEA cocatalyst addition (2.5 mL of 0.74 mol/litre) and hydrogen partial pressure of 1.5 bar. The results are found in the table below. The molecular weight distribution of the polyethylene composite matrix was found to be 5.4.

| Run No. | F.L. | C.E. | T | E | TSy | Ey | TSb | Eb | I.E. | MI₂ | MI₁₀ | M1₂₁ |
|---|---|---|---|---|---|---|---|---|---|---|---|---|
| 1 | 26 | 404 | 7 | - | 30 | - | 15 | 144 | 54 | 0.1 | 0.4 | 2.2 |

### Example 11

Example 1 was repeated, but now the cocatalyst TEA was replaced by a 1:1 molar mixture diethylzinc/TEA under Condition B, with a partial hydrogen pressure of 2 bar and an ethylene feeding of 4 bar. In 1.5 litre of dry heptane was added successively 2 ml of 1-octene, 1.5 ml diethyl zinc (1 mol/l) and 1.5 mL TEA (1 mol/litre). The resulting catalyst molar ratios were Al/Ti/Mg/Cl/OH/Zn = 101/0.75/10/100/140/46. The results are given in the following table.

| Run No. | F.L. | C.E. | T | mp | Xc | MI₂ | Ml₁₀ | MI₂ |
|---|---|---|---|---|---|---|---|---|
| 1 | 28 | 64 | 41 | 137 | 78 | - | 0.3 | 1.2 |

### Example 12

Example 1 was repeated but instead of using TBT 1.3 mL of 0.018 mol/litre vanadiumtetrachloride (VTC) (2.45x10⁻⁵ mol) was added. The Al/V/Mg/CL/OH atomic ratio was 120/0.75/10/53/140. The polymerization was carried out at 60°C using Condition B and 4 bars of hydrogen pressure and 4 bars of ethylene feeding. The suspension prepared above was added to 1.4 litres of dry and oxygen free n-heptane containing 1.14x10⁻³ mol of TEA compound (1.1 mL; 1 mol/litre). The results are listed in the following table.

| Run No. | F.L. | C.E. | T |
|---|---|---|---|
| 1 | 86 | 0.4 | 360 |
| 2 | 77 | 1.1 | 240 |

### Example 13

Example 1 was repeated but instead of Satintone W/W, 20 g Satintone 5 was used. The filler composition had an Al/Ti/Mg/Cl/OH atomic ratio of 55/0.75/10/100/140. Polymerization was effected under Condition B, with a partial hydrogen pressure of 2 bar and an ethylene feeding pressure of 4 bar. In 1.5 litre of dry heptane was added 3.0 mL TEA (1 mol/litre). The results are listed in the following table.

| Run | F.L. | C.E. | T | mp | Xc | E | TSy | Ey | TSb | Eb , | I.E. |
|---|---|---|---|---|---|---|---|---|---|---|---|
| 1 | 54 | 2.3 | 238 | 130 | 59 | 2.7 | 33 | 3.2 | 39 | 68 | 145 |
| 2 | 63 | 3.1 | 200 | 130 | 57 | 3.4 | 22 | 2.4 | 24 | 3 | 22 |

## Claims

1. A process for the production of polyolefin composites comprising olefin homopolymer or interpolymer and filler, which process comprises polymerizing one or more olefins in the presence of:
A. a transition metal catalyst containing filler composition obtained by combining under an inert atmosphere in a diluent a dehydrated filler containing from 0.001 to 10 mmo surface-hydroxyl groups per gram of filler with:
i) an organoaluminum compound;
ii) an organomagnesium compound which can be transformed into magnesium halide by halogenation;
iii) a halogenating agent capable of halogenating the organomagnesium compound of ii);
iv) a Group 4, 5, or 6 transition metal compound; and
v) an organoaluminum reducing agent capable of reducing the Group 4, 5, or 6 transition metal compound of iv);
with the proviso that halogen containing components and the organomagnesium compound of ii) are employed in such quantities as to give a halogen:magnesium atomic ratio of at least 2, the dehydrated filler and the organoaluminum compound i) are employed in such quantities that the mole ratio of organoaluminum compound i) to surface-hydroxyl groups of the dehydrated filler is from 0.01 to 1, and the reducing agent v) is added subsequent to the transition metal compound iv) and,
B. a cocatalyst or activator for the transition metal catalyst; and terminating the polymerization when a sufficient quantity of olefin or olefins has been polymerized to obtain a polyolefin composite comprising from 95 to 5 percent by weight of olefin homopolymer or interpolymer and from 5 to 95 percent by weight of filler.

2. A process according to Claim 1 wherein the mole ratio of organoaluminum compound i) to surface-hydroxyl groups of the dehydrated filler is from 0.01 to 0.4 and the mole ratio of organomagnesium compound ii) to surface-hydroxyl groups of the dehydrated filler is from 0.01 to 0.4.

3. A process according to Claim 1 or Claim 2 where n the dehydrated filler containing surface-hydroxyl groups has a surface hydroxyl content of from 0.01 to 5 mmol hydroxyl groups per gram of filler.

4. A process according to any one of Claims 1 to 3 wherein the organoaluminum compound i) is trialkyl aluminum wherein the alkyl groups contain from 1 to 10 carbon atoms.

5. A process according to any one of Claims 1 to 4 wherein the organomagnesium compound ii) is a hydrocarbon soluble organomagnesium compound of the formula R₂. ₙMgXₙ.xMR'_{y} wherein R independently each occurrence is a hydrocarbyl group having from 1 to 20 carbon atoms, X independently each occurrence is halo or hydrocarbyloxy with from 1 to 20 carbon atoms in the hydrocarbyl part thereof, n is from 0 to 2 with the proviso that if X is halo n is at most 1, M is aluminum, zinc or boron. R' independently each occurrence is hydrogen, hydrocarbyl having from 1 to 20 carbon atoms or hydrocarbyloxy with from 1 to 20 carbon atoms in the hydrocarbyl part thereof, y has a value equal to the valence of M, and x has a value from 0 to 10.

6. A process according to any one of Claims 1 to 5 wherein the halogenating agent iii) is an alkyl aluminum halide, hydrogen halide, silicon halide or boron halide.

7. A process according to any one of Claims 1 to 6 wherein the Group 4, 5 or 6 transition metal compound is halide, hydrocarbyloxide or mixed halide/hydrocarbyloxide of titanium, zirconium, hafnium, or vanadium.

8. A process according to any one of Claims 1 to 7 wherein the organoaluminum reducing agent v) is trialkyl aluminum, diaJkyl aluminum halide, alkyl aluminum dihalide, or a combination thereof.

9. A process according to any one of Claims 1 to 8 wherein the dehydrated filler containing surface-hydroxyl groups is an inorganic filler having a neutral to acidic surface.

10. A process according to any one of Claims 1 to 9 wherein the transition metal catalyst containing filler compositions obtained by combining a dehydrate filler containing from 0.001 to 10 mmol surface-hydroxyl groups per gram of filler and having a neutral to acidic surface with:
i) a trialkyl aluminum compound;
ii) an organomagnesium compound of the formula Fl₂Mg.xMR'_{y}, wherein R independently each occurrence is an alkyl group having from 2 to 8 carbon atoms and M, R', x, and y are as defined previously;
iv) a Group 4, 5, or 6 transition metal compound; and
v) an organoaluminum reducing agent capable of reducing the Group 4, 5, or 6 transition metal compound iv) which reducing agent is an alkyl aluminum dihalide, dialkyl aluminum halide, or a combination thereof.

11. A process according to any one of Claims 1 to 10 further comprising the step of adding an electron-donor compound.

12. A process according to any one of Claims 1 to 11 wherein the organomagnesium compound ii) and the Group 4, 5, or 6 transition metal compound iv) are employed in such quantities as to give a magnesium transition metal atomic ratio of from 1:5 to 100:1.

13. A process according to any one of Claims 1 to 12 wherein the reducing agent v) and the Group 4, 5, or 6 transition metal compound iv) are employed in such quantities as to give an aluminum:transition metal atomic ratio of from 2:1 to 500:1.

14. A process according to any one of Claims 1 to 13 wherein the halogen groups present in components i), ii), iii), iv) and v) and the organomagnesium compound ii) are such as to give a halogen:magnesium atomic ratio of from 2:1 to 20:1.

15. A process according to any one of Claims 1 to 14 wherein the diluent is a hydrocarbon medium.

16. A process according to any one of Claims 1 to 15 wherein the cocatalyst B is an organometal compound containing aluminum, boron, zinc or magnesium.

17. A process according to any one of Claims 1 to 16 wherein the olefin or olefins are selected from the group of ethylene and α-olefins containing from 3 to 18 carbon atoms.

18. A polyolefin composite obtained according to the process of any one of Claims 1 to 17.

19. A shaped article made from a polyolefin composite according to Claim 18.

20. A transition metal catalyst containing filler composition useful in the production of polyolefin composites, whip composition is obtained by combining under an inert atmosphere in a diluent a dehydrated filler containing from 0.001 to 10 mmol surface-hydroxyl groups per gram of filler with:
i) an organoaluminum compound;
ii) an organomagnesium compound which can be transformed into magnesium halide by halogenation;
iii) a halogenating agent capable of halogenating the organomagnesium compound of ii);
iv) a Group 4, 5, or 6 transition metal compound; and
v) an organoaluminum reducing agent capable of reducing the Group 4, 5, or 6 transition metal compound of iv);
with the proviso that halogen containing components and the organomagnesium compound of ii) are employed in such quantities as to give a halogen:magnesium atomic ratio of at least 2, the dehydrated filler and the organoaluminum compound i) are employed in such quantities that the mole ratio of organoaluminum compound i) to surface-hydroxyl groups of the dehydrated filler is from 0.01 to 1, and the reducing agent v) is added subsequent to the transition metal compound iv); and recovering the composition.

## Patentansprüche

1. Verfahren zur Herstellung von Olefinhomopolymer oder Interpolymer und Füllstoff umfassenden Polyolefinverbundstoffen, wobei das Verfahren das Polymerisieren von einem oder mehreren Olefinen in der Gegenwart von:
(A) einem eine Füllstoffzusammensetzung enthaltenden Übergangsmetallkatalysator, der erhalten wurde indem unter einer inerten Atmosphäre in einem Verdünnungsmittel ein dehydratisierter Füllstoff, der von 0,001 bis 10 mMol Oberflächenhydroxylgruppen pro Gramm Füllstoff enthält, mit
i) einer Organoaluminiumverbindung;
ii) einer Organomagnesiumverbindung, die durch Halogenierung in ein Magnesiumhalogenid übergeführt werden kann;
iii) einem Halogenierungsmittel, das die Organomagnesiumverbindung von ii) halogenieren kann;
iv) einer Übergangsmetallverbindung der Gruppe 4, 5 oder 6; und
v) einem Organoaluminiumreduktionsmittel, das die Übergangsmetallverbindung der Gruppe 4, 5 oder 6 von iv) reduzieren kann, vereinigt wurden;
mit der Maßgabe, daß halogenenthaltende Komponenten und die Organomagnesiumverbindung von ii) in solchen Mengen verwendet werden, um ein Halogen:Magnesium-Atomverhältnis von mindestens 2 zu ergeben, der dehydratisierte Füllstoff und die Organoaluminiumverbindung i) in solchen Mengen verwendet werden, daß das Molverhältnis der Organoaluminiumverbindung i) zu den Oberflächenhydroxylgruppen des dehydratisierten Füllstoffs von 0,01 bis 1 ist und das Reduktionsmittel v) nachfolgend auf die Übergangsmetallverbindung iv) zugegeben wird, und
(B) einem Cokatalysator oder Aktivierungsmittel für den Übergangsmetallkatalysator;
und Beenden der Polymerisation wenn eine ausreichende Menge des Olefins oder der Olefine polymerisiert worden ist, um einen Polyolefinverbundstoff zu erhalten, der von 95 bis 5 Gew.-% Olefinhomopolymer oder Interpolymer und von 5 bis 95 Gew.-% Füllstoff enthält.

2. Verfahren nach Anspruch 1, worin das Molverhältnis von Organoaluminiumverbindung i) zu Oberflächenhydroxylgruppen des dehydratisierten Füllstoffs von 0,01 bis 0,4 ist und das Molverhältnis von Organomagnesiumverbindung ii) zu Oberflächenhydroxylgruppen des dehydratisierten Füllstoffs von 0,01 bis 0,4 ist.

3. Verfahren nach Anspruch 1 oder Anspruch 2, worin der Oberflächenhydroxylgruppen enthaltende dehydratisierte Füllstoff einen Oberflächenhydroxylgehalt von 0,01 bis 5 mMol Hydroxylgruppen pro Gramm Füllstoff aufweist.

4. Verfahren nach einem der Ansprüche 1 bis 3, worin die Organoaluminiumverbindung i) Trialkylaluminium ist, worin die Alkylgruppen von 1 bis 10 Kohlenstoffatome enthalten.

5. Verfahren nach einem der Ansprüche 1 bis 4, worin die Organomagnesiumverbindung ii) eine in Kohlenwasserstoff lösliche Organomagnesiumverbindung der Formel R₂₋ₙMgXₙ.xMR'_{y} ist, worin R unabhängig bei jedem Auftreten eine Hydrocarbylgruppe mit von 1 bis 20 Kohlenstoffatomen ist, X unabhängig bei jedem Auftreten Halogen oder Hydroxycarbyloxy mit von 1 bis 20 Kohlenstoffatomen in dem Hydrocarbylteil davon ist, n von 0 bis 2 ist, mit der Maßgabe, daß wenn X Halogen ist n höchstens 1 ist, M Aluminium, Zink oder Bor ist, R' unabhängig bei jedem Auftreten Wasserstoff, Hydrocarbyl mit von 1 bis 20 Kohlenstoffatomen oder Hydrocarbyloxy mit von 1 bis 20 Kohlenstoffatomen in dem Hydrocarbylteil davon ist, y einen Wert gleich der Valenz von M aufweist und x einen Wert von 0 bis 10 aufweist.

6. Verfahren nach einem der Ansprüche 1 bis 5, worin das Halogenierungsmittel iii) ein Alkylaluminiumhalogenid, Wasserstoffhalogenid, Siliciumhalogenid oder Borhalogenid ist.

7. Verfahren nach einem der Ansprüche 1 bis 6, worin die Übergangsmetallverbindung der Gruppe 4, 5 oder 6 ein Halogenid, Hydrocarbyloxid oder ein gemischtes Halogenid/Hydrocarbyloxid von Titan, Zirkonium, Hafnium oder Vanadium ist.

8. Verfahren nach einem der Ansprüche 1 bis 7, worin das Organoaluminiumreduktionsmittel v) Trialkylaluminium, Dialkylaluminiumhalogenid, Alkylaluminiumdihalogenid oder eine Kombination davon ist.

9. Verfahren nach einem der Ansprüche 1 bis 8 worin der Oberflächenhydroxylgruppen enthaltende dehydratisierte Füllstoff ein anorganischer Füllstoff mit einer neutalen bis sauren Oberfläche ist.

10. Verfahren nach einem der Ansprüche 1 bis 9, worin die Übergangsmetall enthaltende Füllstoffzusammensetzungen erhalten werden durch Vereinigen eines dehydratisierten Füllstoffs, der von 0,001 bis 10 mMol Oberflächenhydroxylgruppen pro Gramm Füllstoff aufweist und eine neutrale bis saure Oberfläche besitzt, mit
i) einer Trialkylaluminiumverbindung;
ii) einer Organomagnesiumverbindung der Formel R₂MgₓMR'_{y}, worin R unabhängig bei jedem Auftreten eine Alkylgruppe mit 2 bis 8 Kohlenstoffatomen ist und M, R', x und y wie vorstehend definiert sind;
iv) einer Übergangsmetallverbindung der Gruppe 4, 5 oder 6; und
v) einem Organoaluminiumreduktionsmittel, das die Übergangsmetallverbindung iv) der Gruppe 4, 5 oder 6 reduzieren kann, wobei das Reduktionsmittel ein Alkylaluminiumdihalogenid, ein Dialkylaluminiumhalogenid oder eine Kombination davon ist.

11. Verfahren nach einem der Ansprüche 1 bis 10, weiterhin umfassend den Schritt des Zugebens einer Elektronendonorverbindung.

12. Verfahren nach einem der Ansprüche 1 bis 11, worin die Organomagnesiumverbindung ii) und die Übergangsmetallverbindung iv) der Gruppe 4, 5 oder 6 in solchen Mengen verwendet werden, um ein Magnesium:Übergangsmetallatomverhältnis von 1:5 bis 100:1 zu ergeben.

13. Verfahren nach einem der Ansprüche 1 bis 12, worin das Reduktionsmittel v) und die Übergangsmetallverbindung iv) der Gruppe 4, 5 oder 6 in solchen Mengen verwendet werden, um ein Aluminium:Übergangsmetallatomverhältnis von 2:1 bis 500:1 zu ergeben.

14. Verfahren nach einem der Ansprüche 1 bis 13, worin die Halogengruppen in den Verbindungen i), ii), iii), iv) und v) und die Organomagnesiumverbindung ii) derart sind, um ein Halogen:Magnesiumatomverhältnis von 2:1 bis 20:1 zu ergeben.

15. Verfahren nach einem der Ansprüche 1 bis 14, worin das Verdünnungsmittel ein Kohlenwasserstoffmedium ist.

16. Verfahren nach einem der Ansprüche 1 bis 15, worin der Cokatalysator B eine Organometallverbindung ist, die Aluminium, Bor, Zink oder Magnesium enthält.

17. Verfahren nach einem der Ansprüche 1 bis 16, worin das Olefin oder die Olefine ausgewählt werden aus der Gruppe, bestehend aus Ethylen und α-Olefinen, die von 3 bis 18 Kohlenstoffatome umfassen.

18. Polyolefinverbundstoff nach dem Verfahren von einem der Ansprüche 1 bis 17.

19. Formstück, hergestellt aus einem Polyolefinverbundstoff nach Anspruch 18.

20. Übergangsmetallkatalysator, enthaltend eine Füllstoffzusammensetzung, der geeignet ist bei der Herstellung von Polyolefinverbundstoffen, wobei die Zusammensetzung erhalten wird indem in einer inerten Atmosphäre in einem Verdünnungsmittel ein dehydratisierter Füllstoff, der von 0,001 bis 10 mMol Oberflächenhydroxylgruppen pro Gramm Füllstoff enthält, vereinigt wird mit:
i) einer Organoaluminiumverbindung;
ii) einer Organomagnesiumverbindung, die durch Halogenierung in ein Magnesiumhalogenid übergeführt werden kann;
iii) einem Halogenierungsmittel, das die Organomagnesiumverbindung von ii) halogenieren kann;
iv) einer Übergangsmetallverbindung der Gruppe 4, 5 oder 6; und
v) einem Organoaluminiumreduktionsmittel, das die Übergangsmetallverbindung der Gruppe 4, 5 oder 6 von iv) reduzieren kann;
mit der Maßgabe, daß halogenenthaltende Komponenten und die Organomagnesiumverbindung von ii) in solchen Mengen verwendet werden, um ein Halogen:Magnesium-Atomverhältnis von mindestens 2 zu ergeben, der dehydratisierte Füllstoff und die Organoaluminiumverbindung i) in solchen Mengen verwendet werden, daß das Molverhältnis der Organoaluminiumverbindung i) zu den Oberflächenhydroxylgruppen des dehydratisierten Füllstoffs von 0,01 bis 1 ist und das Reduktionsmittel v) nachfolgend auf die Übergangsmetallverbindung iv) zugegeben wird und Gewinnen der Zusammensetzung.

## Revendications

1. Procédé pour produire des composites polyoléfiniques comprenant un interpolymère ou un homopolymère d'oléfine(s) et une charge, lequel procédé comprend la polymérisation d'une ou de plusieurs oléfines en présence de :
A. une composition de charge contenant un catalyseur à base de métal de transition, obtenue par combinaison sous une atmosphère inerte dans un diluant, d'une charge déshydratée contenant de 0,001 à 10 mmoles de groupes hydroxy superficiels par gramme de charge, avec
i) un composé organoaluminique ;
ii) un composé organomagnésien qui peut être transformé en halogénure de magnésium par halogénation ;
iii) un agent d'halogénation capable d'halogéner le composé organomagnésien ii) ;
iv) un composé de métal de transition du groupe 4, 5 ou 6 ; et
v) un agent réducteur organoaluminique capable de réduire le composé de métal de transition du groupe 4, 5 ou 6 iv) ;
à condition que l'on utilise les composants halogénés et le composé organomagnésien ii) en des quantités telles qu'elles permettent d'obtenir un rapport atomique halogène/magnésium d'au moins 2, on utilise la charge déshydratée et le composé organoaluminique i) en des quantités telles que le rapport molaire du composé organoaluminique i) aux groupes hydroxy superficiels de la charge déshydratée va de 0,01 à 1, et on ajoute l'agent réducteur v) après le composé de métal de transition iv) et,
B. un cocatalyseur ou un activateur pour le catalyseur à base de métal de transition ;
et la fin de la polymérisation quand une quantité suffisante d'oléfine ou d'oléfines a été polymérisée pour obtenir un composite polyoléfinique comprenant de 95 à 5 % en poids d'interpolymère ou d'homopolymère d'oléfine(s) et de 5 à 95 % en poids de charge.

2. Procédé selon la revendication 1, dans lequel le rapport molaire du composé organoaluminique i) aux groupes hydroxy superficiels de la charge déshydratée va de 0,01 à 0,4 et le rapport molaire du composé organomagnésien ii) aux groupe hydroxy superficiels de la charge déshydratée va de 0,01 à 0,4.

3. Procédé selon la revendication 1 ou 2, dans lequel la charge déshydratée contenant des groupes hydroxy superficiels a une teneur en groupes hydroxy superficiels de 0,01 à 5 mmoles de groupes hydroxy par gramme de charge.

4. Procédé selon l'une quelconque des revendications 1 à 3, dans lequel le composé organoaluminique i) est un trialkylaluminium dans lequel les groupes alkyle comportent de 1 à 10 atomes de carbone.

5. Procédé selon l'une quelconque des revendications 1 à 4, dans lequel le composé organomagnésien ii) est un composé organomagnésien soluble dans les hydrocarbures, de formule R₂₋ₙMgXₙ.xMR'_{y}, dans laquelle chaque R représente indépendamment un groupe hydrocarbyle comportant de 1 à 20 atomes de carbone, chaque X représente indépendamment un atome d'halogène ou un groupe hydrocarbyloxy dont la partie hydrocarbyle comporte de 1 à 20 atomes de carbone, n va de 0 à 2 à condition que si X représente un atome d'halogène, n soit égal à 1 au plus, M représente un atome d'aluminium, de zinc ou de bore, chaque R' représente indépendamment un atome d'hydrogène, un groupe hydrocarbyle comportant de 1 à 20 atomes de carbone ou un groupe hydrocarbyloxy dont la partie hydrocarbyle comporte de 1 à 20 atomes de carbone, y a une valeur égale à la valence de M et x a une valeur de 0 à 10.

6. Procédé selon l'une quelconque des revendications 1 à 5, dans lequel l'agent d'halogénation iii) est un halogénure d'alkylaluminium, un halogénure d'hydrogène, un halogénure de silicium ou un halogénure de bore.

7. Procédé selon l'une quelconque des revendications 1 à 6, dans lequel le composé de métal de transition du groupe 4, 5 ou 6 est un halogénure, un hydrocarbyloxyde ou un halogénure/hydrocarbyloxyde mixte de titane, de zirconium, d'hafnium ou de vanadium.

8. Procédé selon l'une quelconque des revendications 1 à 7, dans lequel l'agent réducteur organoaluminique v) est un trialkylaluminium, un halogénure de dialkylaluminium, un dihalogénure d'alkylaluminium ou une combinaison de ces derniers.

9. Procédé selon l'une quelconque des revendications 1 à 8, dans lequel la charge déshydratée contenant des groupes hydroxyle superficiels est une charge minérale présentant une surface de nature neutre à acide.

10. Procédé selon l'une quelconque des revendications 1 à 9, dans lequel les compositions de charge contenant un catalyseur à base de métal de transition, obtenues par combinaison d'une charge déshydratée contenant de 0,001 à 10 mmoles de groupes hydroxy superficiels par gramme de charge et présentant une surface de nature neutre à acide, avec :
i) un trialkylaluminium ;
ii) un composé organomagnésien de formule R₂Mg.xMR'_{y}, dans laquelle chaque R représente indépendamment un groupe alkyle comportant de 2 à 8 atomes de carbone et M, R', x et y sont tels que définis précédemment ;
iv) un composé de métal de transition du groupe 4, 5 ou 6 ; et
v) un agent réducteur organoaluminique capable de réduire le composé de métal de transition du groupe 4, 5 ou 6 iv), lequel agent réducteur est un dihalogénure d'alkylaluminium, un halogénure de dialkylaluminium ou une combinaison de ces derniers.

11. Procédé selon l'une quelconque des revendications 1 à 10, comprenant en outre l'étape d'addition d'un composé donneur d'électrons.

12. Procédé selon l'une quelconque des revendications 1 à 11, dans lequel on utilise le composé organomagnésien ii) et le composé de métal de transition du groupe 4, 5 ou 6 iv) en des quantités telles qu'elles permettent d'obtenir un rapport atomique magnésium/métal de transition allant de 1:5 à 100:1.

13. Procédé selon l'une quelconque des revendications 1 à 12, dans lequel on utilise l'agent réducteur v) et le composé de métal de transition du groupe 4, 5 ou 6 iv) en des quantités telles qu'elles permettent d'obtenir un rapport atomique aluminium/métal de transition allant de 2:1 à 500:1.

14. Procédé selon l'une quelconque des revendications 1 à 13, dans lequel les atomes d'halogène présents dans les composants i), ii), iii), iv) et v), et le composé organomagnésien ii) sont tels qu'ils permettent d'obtenir un rapport atomique halogène/magnésium allant de 2:1 à 20:1.

15. Procédé selon l'une quelconque des revendications 1 à 14, dans lequel le diluant est un milieu hydrocarboné.

16. Procédé selon l'une quelconque des revendications 1 à 15, dans lequel le cocatalyseur B est un composé organométallique contenant de l'aluminium, du bore, du zinc ou du magnésium.

17. Procédé selon l'une quelconque des revendications 1 à 16, dans lequel l'oléfine ou les oléfines sont choisies dans l'ensemble constitué par l'éthylène et les α-oléfines comportant de 3 à 18 atomes de carbone.

18. Composite polyoléfinique obtenu selon le procédé conforme à l'une quelconque des revendications 1 à 17.

19. Article façonné, fabriqué à partir d'un composite polyoléfinique selon la revendication 18.

20. Composition de charge contenant un catalyseur à base de métal de transition, utile dans la production de composites polyoléfiniques, laquelle composition est obtenue par combinaison sous une atmosphère inerte dans un diluant, d'une charge déshydratée contenant de 0,001 à 10 mmoles de groupes hydroxy superficiels par gramme de charge, avec :
i) un composé organoaluminique ;
ii) un composé organomagnésien qui peut être transformé en halogénure de magnésium par halogénation ;
iii) un agent d'halogénation capable d'halogéner le composé organomagnésien ii) ;
iv) un composé de métal de transition du groupe 4, 5 ou 6 ; et
v) un agent réducteur organoaluminique capable de réduire le composé de métal de transition du groupe 4, 5 ou 6 iv) ;
à condition que l'on utilise les composants halogénés et le composé organomagnésien ii) en des quantités telles qu'elles permettent d'obtenir un rapport atomique halogène/magnésium d'au moins 2, on utilise la charge déshydratée et le composé organoaluminique i) en des quantités telles que le rapport molaire du composé organoaluminique i) aux groupes hydroxy superficiels de la charge déshydratée va de 0,01 à 1, et on ajoute l'agent réducteur v) après le composé de métal de transition iv) ; et
par récupération de la composition.
